# EUROPÄISCHE PATENTANMELDUNG

(11) **EP 0 936 485 A1**
(43) Veröffentlichungstag der Anmeldung: **18.08.1999**
(21) Anmeldenummer: 98440023.4
(22) Anmeldetag: 12.02.1998
(51) Int. Cl.: G02B 6/42, H05K 3/00

(54) **Optoelektronisches Bauelement**

(71) Anmelder: ALCATEL, 75008 Paris (FR)
(72) Erfinder: Göth, Alwin, 72213 Altensteig (DE); Adam, Klaus, 73035 Göppingen (DE); Rehm, Werner, Dr., 70329 Stuttgart (DE); Florjancic, Matjaz, Dr., 71711 Murr (DE)
(74) Vertreter: Schätzle, Albin, Dipl.-Phys.

(57) **Zusammenfassung**

Es ist ein auf einfache Weise sowohl optisch als auch elektrisch ankoppelbares optoelektronisches Modul vorgeschlagen. Es besteht aus einem SMD-Gehäuse (SMD=Surface Mounted Device) (1) für die elektrische Kopplung und einer Buchse (5), an welche ein MT-Stecker paßt, für die optische Kopplung. Das SMD-Gehäuse ist an den MT-Stecker angepaßt. Es enthält eine Steckerbuchse (5), welche die optisch/elektrische Schnittstelle enthält und die im Gehäuse formschlüssig befestigt ist.

## Beschreibung

Die Erfindung betrifft ein optoelektronisches Bauelement mit wenigstens einem elektrischen und wenigstens einem optischen Anschluß.

Derartige Bauelemente werden zunehmend in großer Anzahl in Anlagen der optischen Kommunikation benötigt. Das der Erfindung zugrunde liegende technische Problem besteht deshalb darin, ein solches optoelektronisches Bauelement in der Weise zu gestalten, daß es rationell und kostengünstig hergestellt und montiert werden kann.

Dieses technische Problem ist erfindungsgemäß dadurch gelöst, daß der elektrische Anschluß aus Außenkontakten an einem SMD-Gehöuse und der/die optische/n Anschluß/Anschlüsse aus einer Steckerbuchse besteht, welche mit einem MT-Stecker kompatibel ist.

Ein solches optoelektronisches Bauelement kann kostengünstig hergestellt und auf einfache Weise montiert werden.

Vorteilhafte Einzelheiten der Erfindung sind in den Ansprüchen 2 bis 9 enthalten, welche nachstehend anhand der Figuren näher erläutert sind. Es zeigen:
- Fig. 1: die Droufsicht auf ein Ausführungsbeispiel des erfindungsgemäßen optoelektronischen Bauelements,
- Fig. 2: einen Längsschnitt durch das Bauelement gemäß Fig. 1,
- Fig. 3: Einzelheiten des Bauelements in perspektivischer Darstellung,
- Fig. 4: den Längsschnitt durch die Steckerbuchse und
- Fig. 5: die Draufsicht auf die Steckerbuchse.

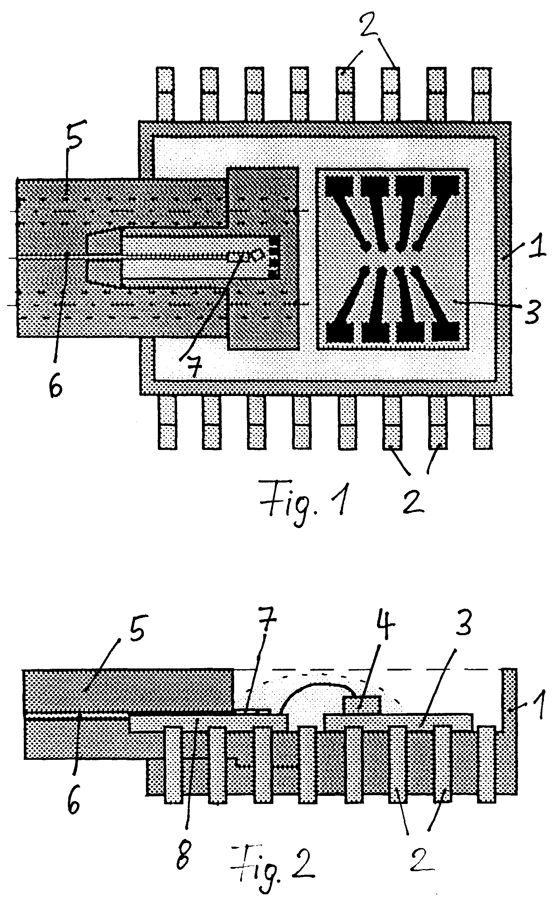

Bei dem in Fig. 1 gezeigten Ausführungsbeispiel soll es sich um ein elektrooptisches Bauelement handeln, welches eine Schnittstelle zwischen Optik und Elektronik enthält, d.h. das Bauelement ist mit einem Lichtwellenleiter koppelbar, dessen optische Signale in dem Bauelement in elektrische Signale umgewandelt werden.

Wie aus Fig. 1 zu erkennen ist, enthält das Bauelement ein Gehäuse 1, welches mit Außenkontakten 2 versehen ist. Das gezeigte Gehäuse 1 ist in SMD-Technik ausgebildet, d.h. es kann auf eine ebene gedruckte Schaltung aufgesetzt werden und die Außenkontakte 2 können mit Leiterbahnen auf der gedruckten Schaltung verlötet werden. Mit den in Fig. 1 nicht gezeigten, in das Gehäuse 1 hineinragenden Enden der Außenkontakte 2 ist eine Leiterplatte 3 verbunden, welche eine zum Betrieb des optischen Bauelements erforderliche elektronische Schaltung 4 enthält.

Ein Teil der inneren Enden der Außenkontakte 2 kann auch mit einer thermisch gut leitenden Platte oder dgl. verbunden sein und der Ableitung der Wärme von einem darüber angeordneten Bauteil dienen.

In dem Gehäuse 1 ist die Steckerbuchse 5 befestigt, in welcher das Ende des Lichtwellenleiters 6 geführt ist. Bei der Steckerbuchse 5 handelt es sich um das Gegenstück zu einem MT-Stecker. MT-Stecker sind bekannt. Sie werden beispielsweise von der Fa. EUROPTlCS Ltd., Winston, Merseyside L35 IRZ, England, angeboten. MT-Stecker sind dafür vorgesehen, um wenigstens einen Lichtwellenleiter an eine andere, ebenfalls einen Lichtwellenleiter enthaltende Vorrichtung anzukoppeln. Zu diesem Zweck ist der Lichtwellenleiter derart in einer Bohrung des MT-Steckers befestigt, daß sein Ende bündig mit der Außenfläche des MT-Steckers ist. Zur genauen Führung und Justierung des MT-Steckers besitzt dieser an der Außenfläche, an welcher auch der Lichtwellenleiter endet, zwei Führungsstifte.

Der Lichtwellenleiter 6 endet an einem optischen Bauelement 7, beispielsweise einer Laserdiode, in welcher die vom Lichtwellenleiter übertragenen optischen Schwingungen in elektrische Schwingungen umgewandelt werden.

In Fig. 2 sind die Teile, welche mit den in Fig. 1 gezeigten Teilen identisch sind, mit den gleichen Bezugszeichen versehen. Außerdem ist zu erkennen, daß in der Steckerbuchse 5 ein Substrat 8 befestigt ist, auf welchem das Ende des Lichtwellenleiters 6 geführt ist und das optische Bauelement 7 sowie die für seinen Betrieb erforderlichen elektrischen Bauelemente angeordnet sind.

In Fig. 3 ist das Substrat 8 mit dem darauf angeordneten optischen Bauelement 7 und dem an dieses angekoppelten Lichtwellenleiter 6 zu erkennen. Der Lichtwellenleiter 6 ist beispielsweise in einer V-förmigen Nut im Substrat 8 befestigt. Das Substrat 8 ist in einer Vertiefung 9 in der Steckerbuchse 5 derart eingeführt und befestigt, daß das freie Ende des Lichtwellenleiters 6 in einer von der Vertiefung 9 zur Stirnseite 10 der Steckerbuchse 5 verlaufenden Bohrung 11 liegt und ihr Ende bündig mit der Außenfläche der Stirnseite 10 endet. Die Steckerbuchse 5 ist außerdem mit den an der Stirnseite 10 endenden Bohrungen 12 versehen, welche zur Aufnahme der Führungsstife des MT-Steckers dienen.

Das von der Stirnseite 10 abgewandte Ende der Steckerbuchse 5 ist seitlich und unten mit Stufen 13 versehen, denen entsprechende Vertiefungen 14 im Gehäuse 1 entsprechen. Diese dienen der formschlüssigen Befestigung der Steckerbuchse 5 im Gehäuse 1. Die Steckerbuchse 5 kann zusätzlich mit dem Gehäuse 1 verklebt sein. Es ist auch möglich, die Steckerbuchse 5 nur mit dem Gehäuse zu verkleben.

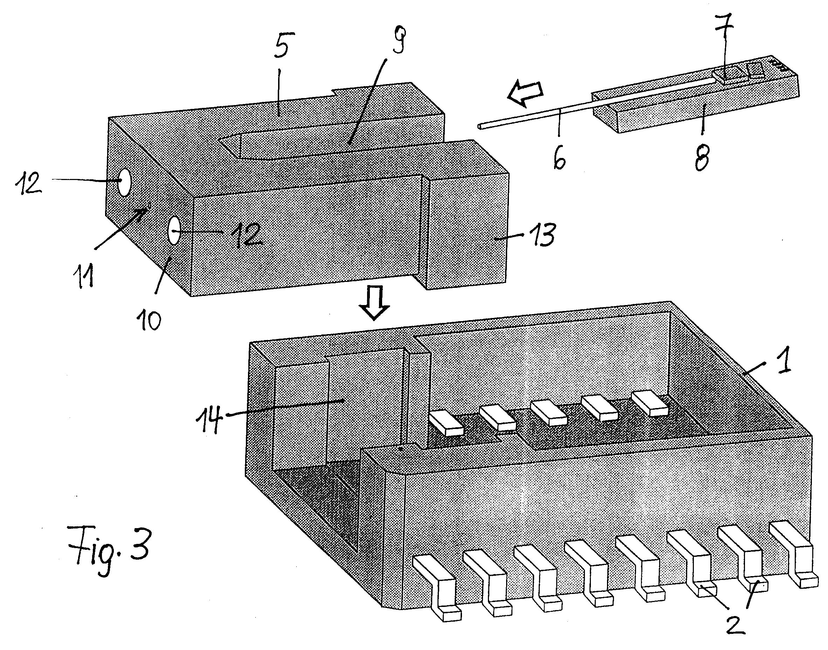

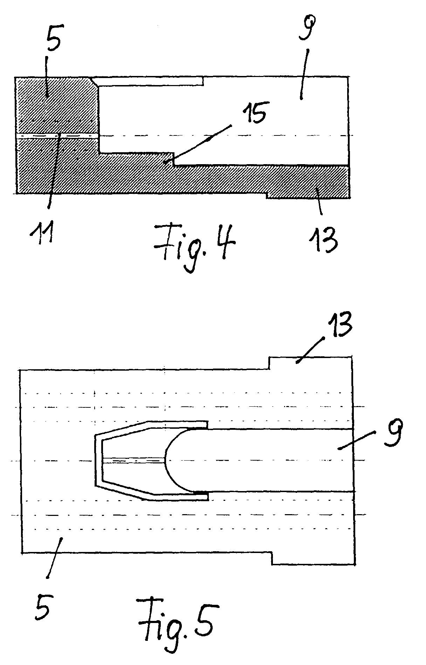

In den Figuren 4 und 5 sind noch Einzelheiten der Steckerbuchse 5 zu erkennen. Es ist die Ausbildung der Vertiefung 9 erkennbar, in welcher das Substrat 8 befestigt wird. Zur Begrenzung der Längsbewegung des Substrats 8 ist die Stufe 15 vorgesehen. Außerdem sind die Bohrung 11 zur Aufnahme des Lichtwellenleiters und die Ausbildung der Stufe 13 deutlich zu erkennen.

## Patentansprüche

1. Optoelektronisches Bauelement mit wenigstens einem elektrischen und wenigstens einem optischen Anschluß, **dadurch gekennzeichnet**, daß der elektrische Anschluß aus Außenkontakten (2) an einem SMD-Gehäuse (1) und der/die optische/n Anschluß/Anschlüsse aus einer Steckerbuchse (5) besteht, welche mit einem MT-Stecker kompatibel ist.

2. Optoelektronisches Bauelement nach Anspruch 1,
dadurch gekennzeichnet, daß die Außenkontakte (2) in SO-Technik (SO = Small Outline) ausgeführt sind.

3. Optoelektronisches Bauelement nach Anspruch 1,
dadurch gekennzeichnet, daß die Außenkontakte (2) in BGA-Technik (BGA = Ball Grid Array) ausgeführt sind.

4. Optoelektronisches Bauelement nach Anspruch 1 und einem der Ansprüche 2 oder 3,
dadurch gekennzeichnet, daß die Steckerbuchse (5) aus einem formschlüssig und/oder kraftschlüssig in dem Gehäuse (1) angeordneten Formteil besteht.

5. Optoelektronisches Bauelement noch Anspruch 4,
dadurch gekennzeichnet, daß in die Steckerbuchse (5) ein Träger (8) eingesetzt ist, der optoelektronische Wandler und/oder passive optische Bauteile enthält.

6. Optoelektronisches Bauelement nach Anspruch 5,
dadurch gekennzeichnet, daß die Steckerbuchse (5) mit einer Vertiefung (9) versehen ist, in welcher ein die optoelektronische Schnittstelle enthaltendes Substrat (8) angeordnet ist.

7. Optoelektronisches Bauelement nach Anspruch 6,
dadurch gekennzeichnet, daß die optoelektronische Schnittstelle aus wenigstens einem Lichtwellenleiter (6) besteht, welcher an ein optisches Bauelement (7) angekoppelt ist.

8. Optoelektronisches Bauelement nach Anspruch 7,
dadurch gekennzeichnet, daß das von der Koppelstelle abgewandte Ende des Lichtwellenleiters (6) in einer zwischen Vertiefung (9) und Stirnseite des Formteils (10) in diesem vorhandenen Bohrung (11) angeordnet ist.

9. Optoelektronisches Bauelement nach Anspruch 8,
dadurch gekennzeichnet, daß in dem Gehäuse (1) eine Leiterplatte (3) angeordnet ist, auf welcher die zum Betrieb des optischen Bauelements (7) erforderliche elektronische Schaltung angeordnet ist.
